# EUROPÄISCHE PATENTANMELDUNG

(11) **EP 4 108 132 A1**
(43) Veröffentlichungstag der Anmeldung: **28.12.2022**
(21) Anmeldenummer: 22177143.9
(22) Anmeldetag: 03.06.2022
(51) Int. Cl.: A47B 11/00, A47B 95/00, E05B 47/00, E05B 65/44, A47B 49/00, F16B 12/20

(54) **VER- UND ENTRIEGELUNGSELEMENT**

(30) Priorität: 22.06.2021 DE 102021116123
(71) Anmelder: Bulthaup GmbH & Co. KG, 84155 Bodenkirchen (DE)
(72) Erfinder: ECKERT, Marc Oliver, 84155 Bodenkirchen (DE)
(74) Vertreter: Herrmann, Uwe

(57) **Zusammenfassung**

Die vorliegende Erfindung betrifft ein Ver- und Entriegelungselement, mit einem ersten und einem zweiten Bauteil (1, 2), welche relativ zueinander beweglich sind und mittels eines Fixierungselements (3) lösbar miteinander verbindbar sind, wobei ein vorzugsweise separates Freischaltelement vorgesehen ist, mittels welchem die ersten und zweiten Bauteile voneinander lösbar sind.

## Beschreibung

Die vorliegende Erfindung betrifft ein Ver- und Entriegelungselement zum lösbaren Verbinden zweier Bauteile miteinander sowie ein Möbel mit einem derartigen Ver- und Entriegelungselement.

Aus dem Stand der Technik sind Möbel, beispielsweise Tische, mit einer ausziehbaren und in ihrer Größe veränderbaren oder einer beweglichen Arbeitsplatte bekannt. Bei derartigen Möbelstücken sind die Arbeitsplatten jedoch häufig nicht in einer beliebigen gewünschten Position arretierbar bzw. verriegelbar oder die eingesetzten Verriegelungselemente stören die Ästhetik des Möbels.

Vor diesem Hintergrund liegt der vorliegenden Erfindung die Aufgabe zugrunde, die Probleme des Stands der Technik abzumildern oder gar ganz zu beseitigen. Insbesondere liegt der vorliegenden Erfindung die Aufgabe zugrunde, ein Ver- und Entriegelungselement für ein Möbel zu schaffen, welches die Ästhetik des Möbels verbessert und ein kontrolliertes Bewegen, Vergrößern oder Verkleinern einer Arbeitsplatte des Möbels ermöglicht.

Diese Aufgabe wird durch die Gegenstände der unabhängigen Ansprüche gelöst. Vorteilhafte Weiterbildungen der Erfindung sind Gegenstand der abhängigen Ansprüche.

Demnach ist ein Ver- und Entriegelungselement vorgesehen, mit einem ersten und einem zweiten Bauteil, welche relativ zueinander beweglich sind und mittels eines Fixierungselements lösbar miteinander verbindbar sind, wobei ein vorzugsweise separates Freischaltelement vorgesehen ist, mittels welchem die ersten und zweiten Bauteile voneinander lösbar sind.

Das zweite Bauteil kann beispielsweise in / an einem Grundkörper eines Möbels montiert sein und das erste Bauteil kann mit einer relativ zu dem Grundkörper beweglichen Arbeitsplatte verbunden sein. Beispielsweise kann die Arbeitsplatte relativ zu dem Grundkörper drehbar oder verschwenkbar gelagert sein.

Das Freischalteelement ist vorzugsweise separat von dem Ver- und Entriegelungselement und / oder dem Möbel ausgebildet und kann beispielsweise räumlich getrennt verwahrt werden. Die Arbeitsplatte kann beispielsweise in einem ersten Zustand in einer ersten Relativposition zu dem Grundkörper angeordnet sein und in dieser Position mittels des Fixierungselements lösbar gehalten sein.

Soll die Arbeitsplatte in eine zweite Position bewegt werden, so wird das separate Freischalteelement in die Nachbarschaft des Ver- und Entriegelungselements bewegt, vorzugsweise in eine Positionierungsaufnahme eingelegt, wodurch das Fixierungselement gelöst wird. Die Arbeitsplatte kann nun in die zweite Relativposition zu dem Grundkörper bewegt werden, z.B. um 45° oder 90° gedreht werden.

Gemäß einer Ausführungsform der Erfindung ist das erste Bauteil um einen Drehpunkt drehbar gelagert und das Fixierungselement ist räumlich getrennt von dem Drehpunkt angeordnet ist. In anderen Worten ist das Fixierungselement exzentrisch angeordnet. Eine Umlaufbahn bzw. Kreisbahn um den Drehpunkt kann kreisrund sein, kann aber auch eine andere Geometrie aufweisen und z.B. elliptisch oder eiförmig sein.

Gemäß einer Ausführungsform ist das das Fixierungselement auf oder benachbart zu einer den Drehpunkt umlaufenden Umlaufbahn, z.B. Kreisbahn angeordnet. Durch die exzentrische Anordnung des Fixierungselement kann eine unerwünschte Bewegung der Arbeitsplatte besonders zuverlässig verhindert werden.

Das Fixierungselement kann einstückig oder mehrstückig ausgestaltet und dazu ausgelegt sein, die ersten und zweiten Bauteile mittels Reibschluss, Formschluss und / oder Kraftschluss miteinander zu verbinden. Beispielsweise kann das Fixierungselement als Rastverbindung ausgebildet sein oder kann einen Stift oder Bolzen umfassen, welcher in eine korrespondierende Aufnahme reversibel einführbar ist.

Gemäß einer bevorzugten Ausführungsform ist das Fixierungselement zweistückig ausgebildet und umfasst zwei Formschlusselemente, welche miteinander lösbar in Eingriff treten können.

Vorzugsweise weist das zweite Bauteil ein Fixierungselement auf, welches vorzugsweise als Bolzen, Zapfen oder sonstiges vorspringendes Formschlusselement ausgebildet ist, welches dazu ausgelegt ist, mit einem entsprechenden Fixierungselement des ersten Bauteils, welches vorzugsweise als Aufnahme, Nut oder sonstiges rückspringendes Formschlusselement ausgelegt ist, zusammenzuwirken, vorzugsweise in Eingriff zu treten, um die ersten und zweiten Bauteile lösbar miteinander zu verbinden.

Eine umgekehrte Anordnung, bei der das rückspringende Formschlusselement seitens des zweiten Bauteils und das vorspringende Formschlusselement seitens des ersten Bauteils ausgebildet ist, ist ebenfalls denkbar.

Dass Fixierungselement kann aber auch zumindest teilweise separat von den ersten und zweiten Bauteilen ausgebildet sein und beispielsweise einen beweglichen Bolzen umfassen, welcher reversibel in eine die ersten und zweiten Bauteile durchdringende Aufnahme einführbar ist.

Das Freischalteelement ist vorzugsweise dazu ausgelegt, eine Verbindung des ersten Bauteils mit dem zweiten Bauteil durch das Fixierungselement dadurch zu lösen, dass das Freischalteelement eine Bewegung des ersten Bauteils relativ zu dem zweiten Bauteil auslöst, bei welcher vorzugsweise ein Abstand zwischen dem ersten Bauteil und dem zweiten Bauteil vergrößert wird.

Durch diese Bewegung wird beispielsweise der Bolzen des zweiten Bauteils aus der Aufnahme des ersten Bauteils gezogen. Alternativ oder zusätzlich kann auch das Fixierungselement oder ein Teil davon, beispielsweise ein Bolzen, mittels des Freischaltelements bewegt werden. Beispielsweise kann ein Bolzen des Fixierungselements aus einer die ersten und zweiten Bauteile durchdringenden Aufnahme bewegt werden.

Gemäß einer Ausführungsform der Erfindung ist das Freischalteelement dazu ausgelegt, eine Verbindung des ersten Bauteils mit dem zweiten Bauteil durch das Fixierungselement vorzugsweise mittels Magnetkraft zu lösen, wenn das Freigabeelement benachbart zu dem Ver- und Entriegelungselement angeordnet ist.

Beispielswiese kann das Freischalteelement benachbart zu dem Fixierungselement angeordnet sein und direkt auf dieses einwirken. Alternativ oder zusätzlich kann das Freischalteelement an einem anderen Ort des Ver- und Entriegelungselements, beispielsweise bei dem Drehpunkt angeordnet sein. In diesem Fall ist die Wirkung des Freischaltelements auf das Fixierungselement indirekt und wird beispielsweise über einen Steg oder ein sonstiges Übertragungsbauteil auf das Fixierungselement übertragen.

Hierbei hat es sich als vorteilhaft erwiesen, wenn das Freischalteelement und / oder das erste Bauteil und / oder das zweite Bauteil und / oder das Fixierungselement und / oder das Übertragungsbauteil zumindest teilweise oder auch vollständig aus einem magnetischen oder metallischen Material gefertigt ist.

Weiterhin kann es gewünscht sein, dass die Arbeitsplatte zu dem Grundkörper des Möbels nicht frei beweglich, sondern zwischen mehreren vorgegebenen Relativpositionen beweglich ist. Zu diesem Zweck hat es sich in der Praxis als vorteilhaft herausgestellt, wenn das erste und / oder das zweite Bauteil ein oder mehrere Positionierungselemente aufweist bzw. aufweisen, mittels welcher definierte Relativpositionen der ersten und zweiten Bauteile zueinander vorgegeben werden, in welche die ersten und zweiten Bauteile nach erfolgter Freigabe durch das Freischaltelement beweglich sind.

Beispielsweise können mehrere Rastelemente vorgesehen sein, welche beispielsweise auf einer den Drehpunkt umlaufenden Umlaufbahn angeordnet sind und die Arbeitsplatte jeweils in einer vorbestimmten Position arretieren, sodass die Arbeitsplatte beispielsweise in 90°-Schritten auf dem Grundkörper gedreht werden kann.

Ein weiterer Aspekt der Erfindung betrifft ein Möbel, insbesondere ein Möbelstück mit einer Arbeitsplatte, welches mindestens ein erfindungsgemäßes Ver- und Entriegelungselement aufweist, wobei das zweite Bauteil vorzugsweise an einem Grundkörper des Möbels montiert ist und das erste Bauteil mit einem relativ zu dem Grundkörper beweglichen Element, vorzugsweise einer drehbaren Arbeitsplatte, verbunden ist.

Das Möbel kann mehrere beispielsweise übereinander oder nebeneinander angeordnete Arbeitsplatten, Platten oder sonstige Elemente aufweisen, welche mittels mindestens eines erfindungsgemäßen Ver- und Entriegelungselements an dem Grundkörper des Möbels beweglich gelagert sind. Ist vorliegende von einer "Arbeitsplatte" die Rede, so ist dies nur beispielhaft zu verstehen und ein erfindungsgemäßes Ver- und Entriegelungselements kann selbstverständlich zur beweglichen Lagerung eines beliebigen Elements zum Einsatz kommen.

Gemäß einer bevorzugten Ausführungsform weist das Möbel benachbart zu dem Drehpunkt des erfindungsgemäßen Ver- und Entriegelungselements und / oder dem Fixierungselement eine Positionierungsaufnahme für das Freigabeelement auf, welche dazu ausgelegt ist, das Freigabeelement lösbar und weitegehend oder vollständig spiellos aufzunehmen.

Beispielsweise ist das erfindungsgemäße Ver- und Entriegelungselement bis auf das separate Freischaltelement für einen Benutzer unsichtbar an / in dem Möbel montiert, insbesondere zwischen einem Grundkörper und einer Arbeitsplatte des Möbels angeordnet.

Die Positionierungsaufnahme ist vorzugsweise in Form einer Kuhle oder einer Aussparung in der Arbeitsplatte ausgestaltet, in welche ein Benutzer das separate Freischaltelement einsetzen bzw. anordnen kann. Dem Benutzer wird somit eine durchgängige Arbeitsplatte mit einer kleinen Kuhle präsentiert, sodass eine schlichte und "cleane" Optik des Möbels erreicht wird und die Arbeitsplatte zudem sehr hygienisch und leicht zu reinigen ist.

Um die Arbeitsplatte in einer gewünschten Position zu fixieren, wird das Freischalteelement von dem Benutzer wieder aus der Positionierungsaufnahme entfernt.

Weiterhin betrifft die Erfindung ein System aus einem erfindungsgemäßen Ver- und Entriegelungselement und / oder einem erfindungsgemäßen Möbel und einem separaten Freischalteleement.

Ein erfindungsgemäßes Freischaltelement ist dazu ausgelegt, mit einem erfindungsgemäßen Ver- und Entriegelungselement und / oder einem erfindungsgemäßen Möbel verwendet zu werden.

Ein anderer Aspekt der Erfindung betrifft eine Verwendung eines erfindungsgemäßen Freischaltelements mit einem erfindungsgemäßen Ver- und Entriegelungselement und / oder einem erfindungsgemäßen Möbel.

Weiterhin betrifft die vorliegende Erfindung ein Verfahren zum Bewegen eines ersten Elements, insbesondere einer Arbeitsplatte, eines Möbels relativ zu einem zweiten Element, insbesondere einem Grundkörper, eines Möbels, mit den Schritten:
- Platzieren eines separaten Freischalteelements in einer Positionierungsaufnahme des ersten Elements, wodurch ein das erste Element an dem zweiten Element lösbar fixierendes Fixierungselement vorzugsweise mittels Magnetkraft gelöst wird, und
- Bewegen des ersten Elements in eine gewünschte Relativposition zu dem zweiten Element.

Vorzugsweise umfasst das Verfahren weiterhin den Schritt:
- Entfernen des Freischaltelements aus der Positionierungsaufnahme, wodurch das erste Element mittels des Fixierungselements an dem zweiten Element lösbar fixiert wird.

Die Positionierungsaufnahme ist vorzugsweise über dem Drehpunkt des erfindungsgemäßen Ver- und Entriegelungselements in der Arbeitsplatte vorgesehen. Vorzugsweise tritt das Freischaltelement in direkten Kontakt, insbesondere in Anlage, mit dem Ver- und Entriegelungselement.

Beispielsweise kann das erste Element so lang von dem ersten Element gelöst sein und somit beweglich sein, solange sich das Freischaltelements in der Positionierungsaufnahme befindet, da in diesem Zustand des Fixierungselement gelöst wird. Wird das Freischalteelement entfernt, so fixiert das Fixierungselement das erste Element in einer gewünschten Position relativ zu dem zweiten Element.

Ein erfindungsgemäßes Verfahren kann sämtliche vorstehend im Kontext der erfindungsgemäßen Vorrichtungen offenbarten Verfahrensmerkmale in Isolation oder in beliebiger Kombination umfassen.

An dieser Stelle wird darauf hingewiesen, dass die Begriffe "ein" und "eine" nicht zwingend auf genau eines dieser Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elements in der Einzahl ein und umgekehrt umfasst der Singular auch mehrere der fraglichen Elemente.

Weitere Einzelheiten, Vorteile und Effekte der vorliegenden Erfindung werden anhand eines in den Zeichnungen dargestellten Ausführungsbeispiels näher erläutert. Gleiche Bezugszeichen bezeichnen hierbei gleiche oder ähnliche Bauteile. Hierbei zeigt:
Fig. 1 eine Explosionsdarstellung eines erfindungsgemäßen Ver- und Entriegelungselements,
Fig. 2 eine Draufsicht eines erfindungsgemäßen Ver- und Entriegelungselements,
Fig. 3 eine Draufsicht des erfindungsgemäßen Ver- und Entriegelungselements aus Fig. 2 mit Freischalteelement, und
Fig. 4 eine Detailansicht einer Arbeitsplatte eines erfindungsgemäßen Möbels mit einer Positionierungsaufnahme und einem daneben angeordneten Freischalteelement.

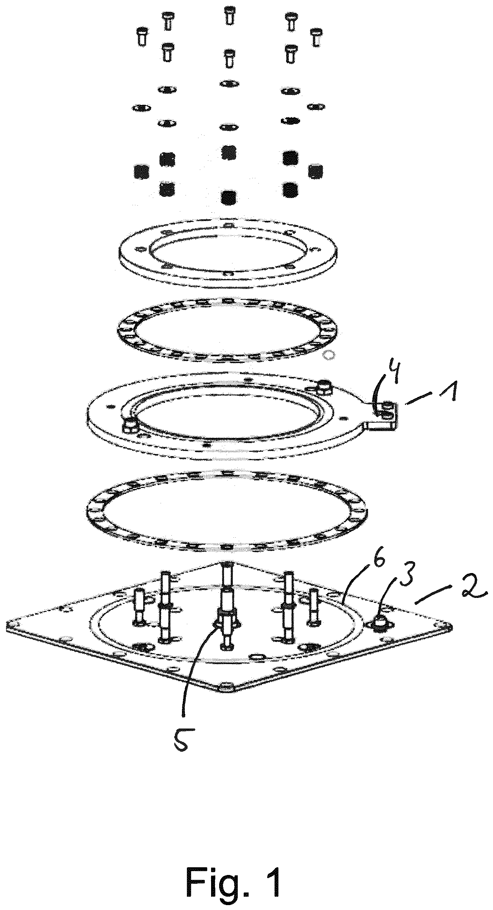

In Fig. 1 ist ein Ver- und Entriegelungselement gezeigt, mit einem ersten und einem zweiten Bauteil 1,2, welche relativ zueinander beweglich sind. Das Fixierungselement umfasst in dieser Ausgestaltung einen seitens des zweiten Bauteils vorgesehenen Bolzen oder Stift 3, welcher in eine Aufnahme 4 des ersten Bauteils 1 in Eingriff gebracht werden kann.

Alternativ kann der Bolzen 3 auch separat zu den Bauteilen 1, 2 ausgebildet sein und reversibel in Aufnahmen der ersten und zweiten Bauteile eingeführt werden, um diese aneinander zu fixieren.

Das erste und das zweite Bauteil 1,2 sind um einen gemeinsamen Drehpunkt 5 drehbar gelagert. Das Fixierungselement bzw. der Bolzen 3 und die Aufnahme 4 sind exzentrisch angeordnet und fallen nicht mit dem Drehpunkt 5 zusammen. Sie sind in radialer Richtung auswärts und benachbart zu einer Umlaufbahn 6 angeordnet, auf welcher das erste Bauteil 1 um das zweite Bauteil 2 drehbar ist.

Wird mittels des Freischaltelements das erste Bauteil 1 von dem zweiten Bauteil 2 wegbewegt (nach oben in Fig. 1) oder das zweite Bauteil 2 von dem ersten Bauteil wegbewegt (nach unten in Fig. 1), so wird der Bolzen 3 aus der Aufnahme 4 bewegt und eine Relativbewegung des ersten Bauteils 1 zu dem zweiten Bauteil 2 freigegeben.

Alternativ kann der Bolzen 3 auch als separates Bauteil ausgebildet sein, welcher die ersten und zweiten Bauteile 1 und 2 durchdringt und aus diesen herausgezogen werden kann, um eine Relativbewegung der ersten und zweiten Bauteile zueinander freizuschalten. In diesem Fall wird mittels des Freischaltelements eine Bewegung des Bolzens 3 relativ zu den ersten und zweiten Bauteilen 1,2 ausgelöst. Die Anordnung der ersten und zweiten Bauteile 1,2, zueinander wird vorzugsweise nicht verändert.

Das zweite Bauteil 2 ist beispielsweise mit einem Grundkörper eines Möbels verbunden und das erste Bauteil 1 an einer Arbeitsplatte montiert oder umgekehrt.

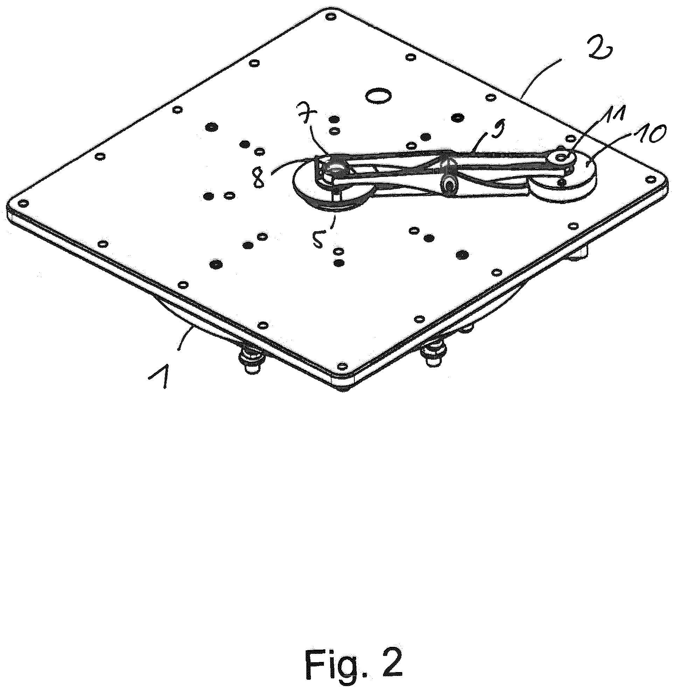

Fig. 2 zeigt eine Draufsicht eines erfindungsgemäßen Ver- und Entriegelungselements. Das erste Bauteil 1 ist in Fig. 2 unter dem zweiten Bauteil 2 angeordnet und nur teilweise sichtbar.

In dem Drehpunkt 5 ist ein Freischaltebauteil 7 angeordnet, welches dazu ausgelegt ist, mit einem separaten Freischalteelement zusammenzuwirken, um die Verbdingung zwischen dem ersten Bauteil 1 und dem zweiten Bauteil 2 zu lösen. Das Freischaltebauteil 7 weist eine Schnittstelle 8 auf, welche dazu ausgelegt ist, eine Kontaktfläche zu dem Freischalteelement zu bilden.

Das Freischaltebauteil 7 ist mittels eines Scharniers oder Stegs 9 mit dem Fixierungselement 10 verbunden. Das Fixierungselement 10 umfasst einen in Fig. 2 nur teilweise erkennbaren Bolzen 11, welcher in einer Aufnahme der ersten und zweiten Bauteile 1, 2 aufgenommen ist und diese durchdringt, um die ersten und zweiten Bauteile 1,2 aneinander zu fixieren. I)n dem in Fig. 2 gezeigten Zustand, sind die ersten und zweiten Bauteile 1,2 aneinander lösbar fixiert.

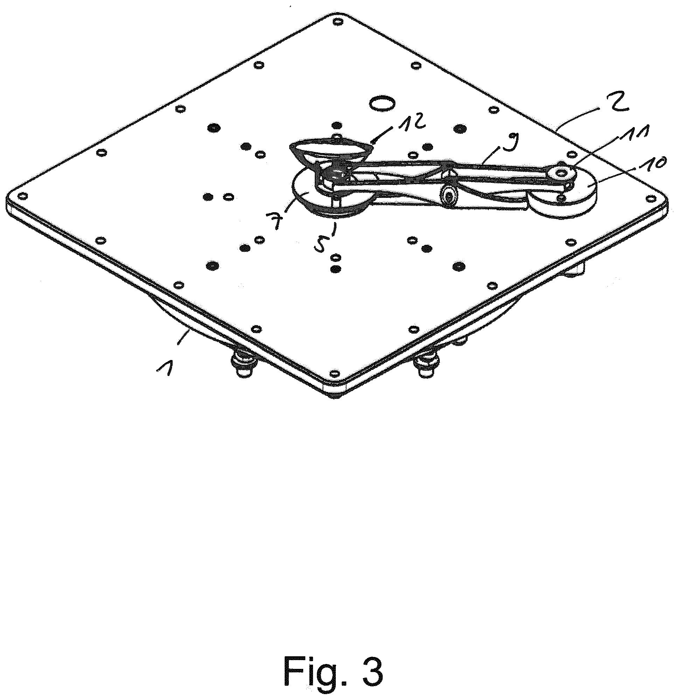

Fig. 3 zeigt eine Draufsicht des erfindungsgemäßen Ver- und Entriegelungselements aus Fig. 2 mit einem Freischalteelement 12, welches auf die Schnittstelle 12 aufgesetzt ist. Mittels Magnetkraft bewegt das Freischalteelement 12 das Freischaltebauteil 7 in Fig. 3 nach oben.

Diese Bewegung wird mittels des Scharniers 9 auf das Fixierungselement 10 übertragen, welches ebenfalls nach oben bewegt wird, sodass der Bolzen 11 aus der Aufnahme gezogen wird und die Verbindung zwischen den ersten und zweiten Bauteilen 1,2 gelöst wird. Die Funktionen der Freischaltung und Fixierung sind somit zwar funktional verbunden aber räumlich getrennt ausgestaltet.

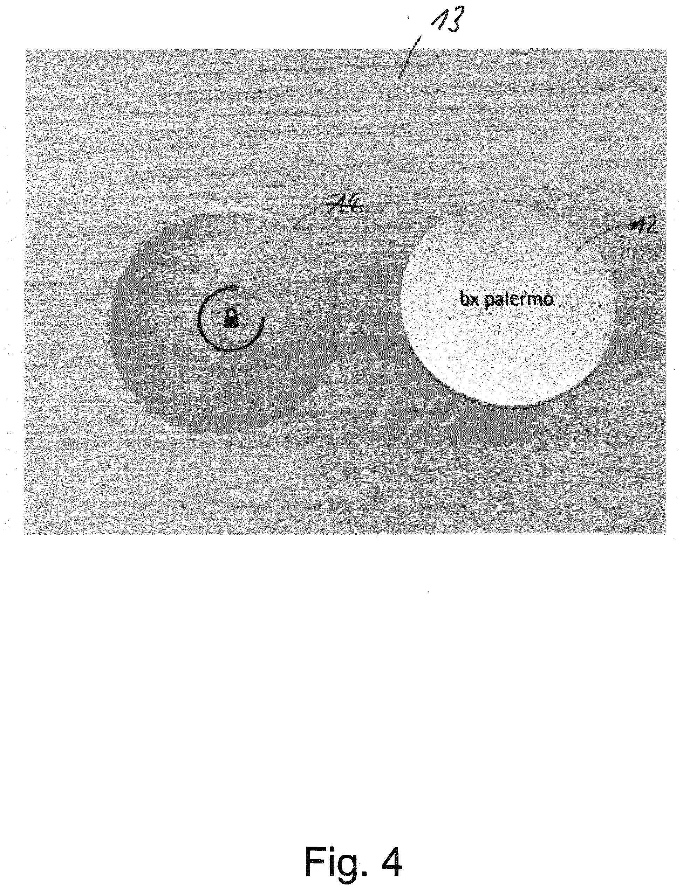

Fig. 4 zeigt eine Detailansicht einer Arbeitsplatte 13 eines erfindungsgemäßen Möbels mit einer Positionierungsaufnahme 14 und einem daneben angeordneten Freischalteelement 12. Unter der Positionierungsaufnahme 14 befindet sich die Schnittstelle 8 eines erfindungsgemäßen Ver- und Entriegelungselements.

Die Positionierungsaufnahme 14 ist mit einem Hinweis ausgestattet, dass ein Drehen der Arbeitsplatte nach rechts zu einem Verriegeln des Ver- und Entriegelungselements führt. Andere Hinweise wären denkbar.

Um das Ver- und Entriegelungselement zu entriegeln, wird das Freischalteelement 12 in der Positionierungsaufnahme 14 platziert und löst so den Bolzen 11 wie im Kontext von Fig. 3 beschrieben.

Das Freischalteelement 12 ist in dieser Ausgestaltung als flache Halbkugel ausgestaltet und passt sich somit spiellos in die Positionierungsaufnahme 14 ein. Die Ausgestaltung des Freischaltelements sowie der Positionierungsaufnahme ist jedoch nicht auf eine derartige Geometrie beschränkt und andere beliebige Formen sind denkbar, solange vorzugsweise das Freischalteelement spiellos in die Positionierungsaufnahme passt.

## Patentansprüche

1. Ver- und Entriegelungselement, mit einem ersten und einem zweiten Bauteil, welche relativ zueinander beweglich sind und mittels eines Fixierungselements lösbar miteinander verbindbar sind, wobei ein vorzugsweise separates Freischaltelement vorgesehen ist, mittels welchem die ersten und zweiten Bauteile voneinander lösbar sind.

2. Ver- und Entriegelungselement gemäß Anspruch 1, wobei das erste Bauteil um einen Drehpunkt drehbar gelagert ist und das Fixierungselement räumlich getrennt von dem Drehpunkt angeordnet ist.

3. Ver- und Entriegelungselement gemäß Anspruch 2, wobei das Fixierungselement auf oder benachbart zu einer den Drehpunkt umlaufenden Umlaufbahn angeordnet ist.

4. Ver- und Entriegelungselement gemäß einem der vorhergehenden Ansprüche, wobei das Fixierungselement dazu ausgelegt ist, die ersten und zweiten Bauteile mittels Reibschluss, Formschluss und / oder Kraftschluss miteinander zu verbinden.

5. Ver- und Entriegelungselement gemäß einem der vorhergehenden Ansprüche, wobei das zweite Bauteil ein Fixierungselement aufweist, welches vorzugsweise als Bolzen, Zapfen oder sonstiges Formschlusselement ausgebildet ist, welches dazu ausgelegt ist, mit einem entsprechenden Fixierungselement des ersten Bauteils, welches vorzugsweise als Aufnahme, Nut oder sonstiges Formschlusselement ausgelegt ist, zusammenzuwirken, vorzugsweise in Eingriff zu treten, um die ersten und zweiten Bauteile lösbar miteinander zu verbinden.

6. Ver- und Entriegelungselement gemäß einem der vorhergehenden Ansprüche 1 bis 4, wobei das Fixierungselement ein separates Formschlusselement aufweist, welches vorzugsweise als Bolzen oder Zapfen ausgebildet und dazu ausgelegt ist, mit einem entsprechenden Formschlusselement, welches vorzugsweise als Aufnahme oder Nut in dem ersten und / oder zweiten Bauteil ausgelegt ist, zusammenzuwirken, vorzugsweise in Eingriff zu treten, um die ersten und zweiten Bauteile lösbar miteinander zu verbinden.

7. Ver- und Entriegelungselement gemäß einem der vorhergehenden Ansprüche, wobei das Freischalteelement dazu ausgelegt ist, eine Verbindung des ersten Bauteils mit dem zweiten Bauteil durch das Fixierungselement dadurch zu lösen, dass das Freischalteelement eine Bewegung des ersten Bauteils relativ zu dem zweiten Bauteil auslöst, bei welcher vorzugsweise ein Abstand zwischen dem ersten Bauteil und dem zweiten Bauteil vergrößert wird oder dadurch zu lösen, dass das Freischalteelement eine Bewegung mindestens eines Formschlusselements des Fixierungselements auslöst, wodurch ein Eingriff dieses Formschlusselements mit einem korrespondierenden Formschlusselement gelöst wird.

8. Ver- und Entriegelungselement gemäß einem der vorhergehenden Ansprüche, wobei das Freischalteelement dazu ausgelegt ist, eine Verbindung des ersten Bauteils mit dem zweiten Bauteil durch das Fixierungselement vorzugsweise mittels Magnetkraft zu lösen, wenn das Freigabeelement benachbart zu dem Ver- und Entriegelungselement angeordnet ist.

9. Ver- und Entriegelungselement gemäß einem der vorhergehenden Ansprüche, wobei ein Übertragungsbauteil, vorzugsweise in Form eines Stegs oder Scharniers, vorgesehen ist, über welches das Freischalteelement auf das Fixierungselement wirkt, um dieses zu lösen.

10. Ver- und Entriegelungselement gemäß einem der vorhergehenden Ansprüche, wobei das Freischalteelement und / oder das erste Bauteil und / oder das zweite Bauteil zumindest teilweise oder auch vollständig aus einem magnetischen oder metallischen Material gefertigt ist.

11. Ver- und Entriegelungselement gemäß einem der vorhergehenden Ansprüche, wobei das erste und / oder das zweite Bauteil ein oder mehrere Positionierungselemente aufweisen, mittels welcher definierte Relativpositionen der ersten und zweiten Bauteile zueinander vorgegeben werden, in welche die ersten und zweiten Bauteile nach erfolgter Freigabe durch das Freischaltelement beweglich sind.

12. Möbel, insbesondere Möbelstück mit einer Arbeitsplatte, welches mindestens ein Ver- und Entriegelungselement gemäß einem der vorhergehenden Ansprüche aufweist, wobei das zweite Bauteil vorzugsweise an einem Grundkörper des Möbels montiert ist und das erste Bauteil mit einem relativ zu dem Grundkörper beweglichen Element, vorzugsweise einer drehbaren Arbeitsplatte, verbunden ist.

13. Möbel gemäß Anspruch 12, **dadurch gekennzeichnet, dass** das Möbel benachbart zu dem Ver- und Entriegelungselement, vorzugsweise zu dem Drehpunkt des Ver- und Entriegelungselements, eine Positionierungsaufnahme für das Freigabeelement aufweist, welche dazu ausgelegt ist, das Freigabeelement lösbar und weitegehend oder vollständig spiellos aufzunehmen.

14. System aus einem Ver- und Entriegelungselement gemäß einem der Ansprüche 1 bis 11 und / oder einem Möbel gemäß einem der Ansprüche 12 oder 13 und einem separaten Freischalteleement.

15. Freischaltelement, welches dazu ausgelegt ist, mit einem Ver- und Entriegelungselement gemäß einem der Ansprüche 1 bis 11 und / oder einem Möbel gemäß einem der Ansprüche 12 oder 13 verwendet zu werden.

16. Verwendung eines Freischaltelements gemäß Anspruch 15 mit einem Ver- und Entriegelungselement gemäß einem der Ansprüche 1 bis 11 und / oder einem Möbel gemäß einem der Ansprüche 12 oder 13.

17. Verfahren zum Bewegen eines ersten Elements, insbesondere einer Arbeitsplatte, eines Möbels relativ zu einem zweiten Element, insbesondere einem Grundkörper, eines Möbels, mit den Schritten:
- Platzieren eines separaten Freischalteelements in einer Positionierungsaufnahme des ersten Elements, wodurch ein das erste Element an dem zweiten Element lösbar fixierendes Fixierungselement vorzugsweise mittels Magnetkraft gelöst wird, und
- Bewegen des ersten Elements in eine gewünschte Relativposition zu dem zweiten Element.

18. Verfahren nach Anspruch 17, weiterhin mit dem Schritt:
- Entfernen des Freischaltelements aus der Positionierungsaufnahme, wodurch das erste Element mittels des Fixierungselements an dem zweiten Element lösbar fixiert wird.
